# EUROPEAN PATENT APPLICATION

(11) **EP 4 503 788 A1**
(43) Date of publication of application: **05.02.2025**
(21) Application number: 23777946.7
(22) Date of filing: 22.03.2023
(51) Int. Cl.: H04W 64/00

(54) **INFORMATION PROCESSING METHOD, APPARATUS AND READABLE STORAGE MEDIUM**

(30) Priority: 28.03.2022 CN 202210316161; 12.08.2022 CN 202210966507
(71) Applicant: Datang Mobile Communications Equipment Co., Ltd., Beijing 100085 (CN)
(72) Inventor: HOU, Yunjing, Beijing 100085 (CN); AI, Ming, Beijing 100085 (CN)
(74) Representative: Maiwald GmbH
(86) International application number: PCT/CN2023/083036
(87) International publication number: WO 2023/185575

(57) **Abstract**

The present disclosure discloses an information processing method, device and a readable storage medium for realizing unaware positioning, and relates to the field of communication technologies. The method includes: an AMF receiving a first request, where the first request is used to request location information of UE, and the first request includes an unaware indication; and the AMF sending the location information of the UE.

## Description

### CROSS-REFERENCE TO RELATED APPLICATION

The present application is filed based on and claims the priority of Chinese Application No. 202210316161.6 filed on March 28, 2022 and the priority of Chinese Application No. 202210966507.7 filed on August 12, 2022, the disclosure of which are incorporated in their entireties by reference herein.

### TECHNICAL FIELD

The present disclosure relates to the field of communication technologies, and in particular to an information processing method, device, and readable storage medium.

### BACKGROUND

When positioning user equipment (UE) in some scenarios, it is necessary to achieve user or UE unaware positioning. For example, when the police or regulatory authorities need to obtain location or movement trajectory of the UE, the positioning process cannot be awared by the user or UE.

However, unaware positioning cannot be achieved in the related art at present.

### SUMMARY

Embodiments of the present disclosure provide an information processing method, device and a readable storage medium for realizing unaware positioning.

In a first aspect, one embodiment of the present disclosure provides an information processing method, including:
receiving, by an access and mobility management function (AMF), a first request; wherein the first request is used to request location information of a user equipment (UE), and the first request includes an unaware indication;
sending, by the AMF, the location information of the UE.

Optionally, the sending, by the AMF, the location information of the UE, includes:
sending, by the AMF, a second request to a location management function (LMF); wherein the second request is used to trigger the LMF to perform positioning, and the second request includes the unaware indication;
receiving, by the AMF, the location information of the UE sent by the LMF;
sending, by the AMF, the location information of the UE.

Optionally, the sending, by the AMF, the location information of the UE, includes:
sending, by the AMF, a third request to a radio access network (RAN) node; wherein the third request is used to transmit a location request, and the third request includes the unaware indication;
receiving, by the AMF, a response message sent by the RAN node;
sending, by the AMF, the location information of the UE or a failure response.

Optionally, the method further includes:
sending, by the AMF, a cancel location request to LMF.

Optionally, the sending, by the AMF, a second request to a location management function (LMF), include:
if the UE is in an idle state or a radio resource control (RRC) inactive state, sending, by the AMF, the second request to the LMF after the UE enters a connected state; or,
if the UE is in an idle state, initiating, by the AMF, a service request process to cause the UE to enter a connected state, and then sending, by the AMF, the second request to the LMF after the UE enters the connected state.

Optionally, the location information of the UE includes: location information of the UE stored by the AMF, wherein the UE is in an idle state or an RRC inactive state.

Optionally, the method further includes:
ignoring privacy check; or,
not sending, by the AMF, a fourth request to the UE, wherein the fourth request is used to notify positioning of the UE; or,
sending, by the AMF, a fourth request to the UE, wherein the fourth request is used to notify the positioning of the UE, and the fourth request includes the unaware indication.

In a second aspect, one embodiment of the present disclosure provides an information processing method, including:
receiving, by a location management function (LMF), a second request from an access and mobility management function (AMF); wherein the second request is used to trigger the LMF to perform positioning, and the second request includes an unaware indication;
sending, by the LMF, location information of a user equipment (UE) to the AMF.

Optionally, the sending, by the LMF, location information of a user equipment (UE) to the AMF, includes:
selecting, by the LMF, a positioning method according to the second request;
sending, by the LMF, the location information of the UE to the AMF, wherein the location information of the UE is obtained according to the positioning method.

Optionally, the sending, by the LMF, location information of a user equipment (UE) to the AMF, includes:
sending, by the LMF, a fifth request to a radio access network (RAN) node, wherein the fifth request includes the unaware indication;
receiving, by the LMF, response information sent by the RAN node according to the fifth request to determine the location information of the UE;
sending, by the LMF, the location information of the UE to the AMF.

Optionally, the method further includes:
receiving, by the LMF, a cancel location request sent by the AMF.

In a third aspect, one embodiment of the present disclosure provides an information processing method, including:
receiving, by a radio access network (RAN) node, a sixth request from a target entity, wherein the sixth request includes an unaware indication;
sending, by the RAN node, a response message to the target entity according to the sixth request;
wherein the target entity includes a location management function (LMF) or an access and mobility management function (AMF).

Optionally, the target entity includes the LMF, and the sending, by the RAN node, a response message to the target entity according to the sixth request, includes:
if the UE is in a connected state, measuring, by the RAN node, a signal of the UE according to the sixth request to obtain measurement information; or, if the UE is in an RRC inactive state, after the UE is in the connected state, obtaining, by the RAN node, measurement information of the UE according to the sixth request;
sending, by the RAN node, a response message to the LMF, wherein the response message includes the measurement information.

Optionally, the target entity includes the LMF, and the sending, by the RAN node, a response message to the target entity according to the sixth request, includes:
sending, by the RAN node, a common sounding reference signal (SRS) configuration to the UE according to the sixth request, measuring a signal of the UE to obtain measurement information;
sending, by the RAN node, a response message to the LMF, wherein the response message includes the measurement information.

Optionally, the target entity includes the LMF, and the sending, by the RAN node, a response message to the target entity according to the sixth request, includes:
if the UE is in an RRC inactive state, rejecting, by the RAN node, the sixth request;
sending, by the RAN node, a response message to the LMF, wherein the response message includes a rejection reason.

In a fourth aspect, one embodiment of the present disclosure provides an information processing method, including:
receiving, by GMLC, a sixth request from a LCS client or an AF, wherein the sixth request includes an unaware indication;
sending, by the GMLC, a first request to the AMF according to the sixth request, wherein the first request includes the unaware indication;
sending, by the GMLC, the location information of the UE to the LCS or AF according to the sixth request.

Optionally, the location information of the UE is sent by the AMF to the GMLC, or is stored in the GMLC.

In a fifth aspect, one embodiment of the present disclosure provides an information processing method, including:
receiving, by a user equipment (UE), a fourth request sent by an access and mobility management function (AMF), wherein the fourth request is used to notify positioning of the UE, and the fourth request includes an unaware indication;
not prompting a user for the positioning of the UE, according to the fourth request.

In a sixth aspect, one embodiment of the present disclosure provides an information processing device, applied to an access and mobility management function (AMF), including: a memory, a transceiver and a processor;
wherein the memory is used to store a computer program; the transceiver is used to send and receive data under control of the processor; the processor is used to read the computer program in the memory and perform the following operations:
receiving a first request; wherein the first request is used to request location information of a user equipment (UE), and the first request includes an unaware indication;
sending the location information of the UE.

Optionally, the processor is further used to read the computer program in the memory and perform the following operations:
sending a second request to a location management function (LMF); wherein the second request is used to trigger the LMF to perform positioning, and the second request includes the unaware indication;
receiving the location information of the UE sent by the LMF;
sending the location information of the UE.

Optionally, the processor is further used to read the computer program in the memory and perform the following operations:
sending a third request to a radio access network (RAN) node; wherein the third request is used to transmit a location request, and the third request includes the unaware indication;
receiving a response message sent by the RAN node;
sending the location information of the UE or a failure response.

Optionally, the processor is further used to read the computer program in the memory and perform the following operations:
sending a cancel location request to LMF.

Optionally, the processor is further used to read the computer program in the memory and perform the following operations:
if the UE is in an idle state or a radio resource control (RRC) inactive state, sending the second request to the LMF after the UE enters a connected state; or,
if the UE is in an idle state, initiating a service request process to cause the UE to enter a connected state, and then sending the second request to the LMF after the UE enters the connected state.

Optionally, the location information of the UE includes: location information of the UE stored by the AMF, wherein the UE is in an idle state or an RRC inactive state.

Optionally, the processor is further used to read the computer program in the memory and perform the following operations:
ignoring privacy check; or,
not sending a fourth request to the UE, wherein the fourth request is used to notify positioning of the UE; or,
sending a fourth request to the UE, wherein the fourth request is used to notify the positioning of the UE, and the fourth request includes the unaware indication.

In a seventh aspect, one embodiment of the present disclosure provides an information processing device, applied to a location management function (LMF), including: a memory, a transceiver and a processor;
wherein the memory is used to store a computer program; the transceiver is used to send and receive data under control of the processor; the processor is used to read the computer program in the memory and perform the following operations:
receiving a second request from an access and mobility management function (AMF); wherein the second request is used to trigger the LMF to perform positioning, and the second request includes an unaware indication;
sending location information of a user equipment (UE) to the AMF.

Optionally, the processor is further used to read the computer program in the memory and perform the following operations:
selecting a positioning method according to the second request;
sending the location information of the UE to the AMF, wherein the location information of the UE is obtained according to the positioning method.

Optionally, the processor is further used to read the computer program in the memory and perform the following operations:
sending a fifth request to a radio access network (RAN) node, wherein the fifth request includes the unaware indication;
receiving response information sent by the RAN node according to the fifth request to determine the location information of the UE;
sending the location information of the UE to the AMF.

In an eighth aspect, one embodiment of the present disclosure provides an information processing device, applied to a radio access network (RAN) node, including: a memory, a transceiver and a processor;
wherein the memory is used to store a computer program; the transceiver is used to send and receive data under control of the processor; the processor is used to read the computer program in the memory and perform the following operations:
receiving a sixth request from a target entity, wherein the sixth request includes an unaware indication;
sending a response message to the target entity according to the sixth request;
wherein the target entity includes a location management function (LMF) or an access and mobility management function (AMF).

Optionally, the target entity includes the LMF; the processor is further used to read the computer program in the memory and perform the following operations:
if the UE is in a connected state, measuring a signal of the UE according to the sixth request to obtain measurement information; or, if the UE is in an RRC inactive state, after the UE is in the connected state, obtaining measurement information of the UE according to the sixth request;
sending a response message to the LMF, wherein the response message includes the measurement information.

Optionally, the target entity includes the LMF; the processor is further used to read the computer program in the memory and perform the following operations:
sending a common sounding reference signal (SRS) configuration to the UE according to the sixth request, measuring a signal of the UE to obtain measurement information;
sending a response message to the LMF, wherein the response message includes the measurement information.

Optionally, the target entity includes the LMF; the processor is further used to read the computer program in the memory and perform the following operations:
if the UE is in an RRC inactive state, rejecting the sixth request;
sending a response message to the LMF, wherein the response message includes a rejection reason.

In a ninth aspect, one embodiment of the present disclosure provides an information processing device, applied to GMLC, including: a memory, a transceiver and a processor;
wherein the memory is used to store a computer program; the transceiver is used to send and receive data under control of the processor; the processor is used to read the computer program in the memory and perform the following operations:
receiving a sixth request from a LCS client or an AF, wherein the sixth request includes an unaware indication;
sending a first request to the AMF according to the sixth request, wherein the first request includes the unaware indication;
sending the location information of the UE to the LCS or AF according to the sixth request.

Optionally, the location information of the UE is sent by the AMF to the GMLC, or is stored in the GMLC.

In a tenth aspect, one embodiment of the present disclosure provides an information processing device, applied to UE, including: a memory, a transceiver and a processor;
wherein the memory is used to store a computer program; the transceiver is used to send and receive data under control of the processor; the processor is used to read the computer program in the memory and perform the following operations:
receiving a fourth request sent by an access and mobility management function (AMF), wherein the fourth request is used to notify positioning of the UE, and the fourth request includes an unaware indication;
not prompting a user for the positioning of the UE, according to the fourth request.

In an eleventh aspect, one embodiment of the present disclosure provides an information processing device, applied to AMF, including:
a first receiving unit used to receive a first request; wherein the first request is used to request location information of a user equipment (UE), and the first request includes an unaware indication;
a first sending unit used to send the location information of the UE.

In a twelfth aspect, one embodiment of the present disclosure provides an information processing device, applied to LMF, including:
a first receiving unit used to receive a second request from an AMF; wherein the second request is used to trigger the LMF to perform positioning, and the second request includes an unaware indication;
a first sending unit used to send location information of UE to the AMF.

In a thirteenth aspect, one embodiment of the present disclosure provides an information processing device, applied to RAN node, including:
a first receiving unit used to receive a sixth request from a target entity, wherein the sixth request includes an unaware indication;
a first sending unit used to send a response message to the target entity according to the sixth request;
wherein the target entity includes LMF or AMF.

In a fourteenth aspect, one embodiment of the present disclosure provides an information processing device, applied to GMLC, including:
a first receiving unit used to receive a sixth request from a LCS client or an AF, wherein the sixth request includes an unaware indication;
a first sending unit used to send a first request to the AMF according to the sixth request, wherein the first request includes the unaware indication;
a second receiving unit used to send the location information of the UE to the LCS or AF according to the sixth request.

In a fifteenth aspect, one embodiment of the present disclosure provides an information processing device, applied to UE, including:
a first receiving unit used to receive a fourth request sent by AMF; wherein the fourth request is used to notify positioning of the UE, and the fourth request includes an unaware indication;
a first sending unit used to, not prompt a user for the positioning of the UE, according to the fourth request.

In a sixteenth aspect, one embodiment of the present disclosure provides a processor-readable storage medium, including a computer program stored thereon; wherein the computer program is used to cause a processor to execute the above method.

In the embodiment of the present disclosure, the AMF obtains the location information of the UE according to the unaware indication in the first request, thereby realizing unaware positioning.

### BRIEF DESCRIPTION OF THE DRAWINGS

FIG. 1 is a first flowchart of an information processing method according to an embodiment of the present disclosure;
FIG. 2 is a second flowchart of an information processing method according to an embodiment of the present disclosure;
FIG. 3 is a third flowchart of an information processing method according to an embodiment of the present disclosure;
FIG. 4 is a fourth flowchart of an information processing method according to an embodiment of the present disclosure;
FIG. 5 is a fifth flowchart of an information processing method according to an embodiment of the present disclosure;
FIG. 6 is a sixth flowchart of an information processing method according to an embodiment of the present disclosure;
FIG. 7 is a seventh flowchart of an information processing method according to an embodiment of the present disclosure;
FIG. 8 is an eighth flowchart of an information processing method according to an embodiment of the present disclosure;
FIG. 9 is a ninth flowchart of an information processing method according to an embodiment of the present disclosure;
FIG. 10 is a tenth flowchart of an information processing method according to an embodiment of the present disclosure;
FIG. 11 is a first flowchart of an information processing method according to an eleventh embodiment of the present disclosure;
FIG. 12 is a twelfth flowchart of an information processing method according to an eleventh embodiment of the present disclosure;
FIG. 13 is a thirteenth flowchart of an information processing method according to an eleventh embodiment of the present disclosure;
FIG. 14 is a first diagram of an information processing device according to an embodiment of the present disclosure;
FIG. 15 is a second diagram of an information processing device according to an embodiment of the present disclosure;
FIG. 16 is a third diagram of an information processing device according to an embodiment of the present disclosure;
FIG. 17 is a fourth diagram of an information processing device according to an embodiment of the present disclosure;
FIG. 18 is a fifth diagram of an information processing device according to an embodiment of the present disclosure;
FIG. 19 is a sixth diagram of an information processing device according to an embodiment of the present disclosure;
FIG. 20 is a seventh diagram of an information processing device according to an embodiment of the present disclosure;
FIG. 21 is an eighth diagram of an information processing device according to an embodiment of the present disclosure;
FIG. 22 is a ninth diagram of an information processing device according to an embodiment of the present disclosure; and
FIG. 23 is a tenth diagram of an information processing device according to an embodiment of the present disclosure.

### DETAILED DESCRIPTION

The terms "and/or" in the embodiments of the present disclosure are used to describe association relationship between associated objects, and indicate that there may be three relationships, for example, A and/or B means there are three situations, i.e., there is A alone, there are both of A and B, or, there is B alone. The character "/" generally means that relationship between associated objects before and after the character "/" is "or".

The term "plurality" in the embodiments of the present disclosure means two or more, and other quantifiers are similar.

The technical solutions in the embodiments of the present disclosure will be described hereinafter in a clear and complete manner in conjunction with the accompanying drawings of the embodiments of the present disclosure. Obviously, the following embodiments are merely a part of, rather than all of, the embodiments of the present disclosure, and based on these embodiments, a person skilled in the art may obtain the other embodiments, which also fall within the scope of the present disclosure.

Embodiments of the present disclosure provide an information processing method and device to achieve unaware positioning.

The method and the device are based on the same application concept. Since the method and the device solve the problem in a similar principle, implementation of the device and the method can refer to each other, and the repeated parts will not be repeated.

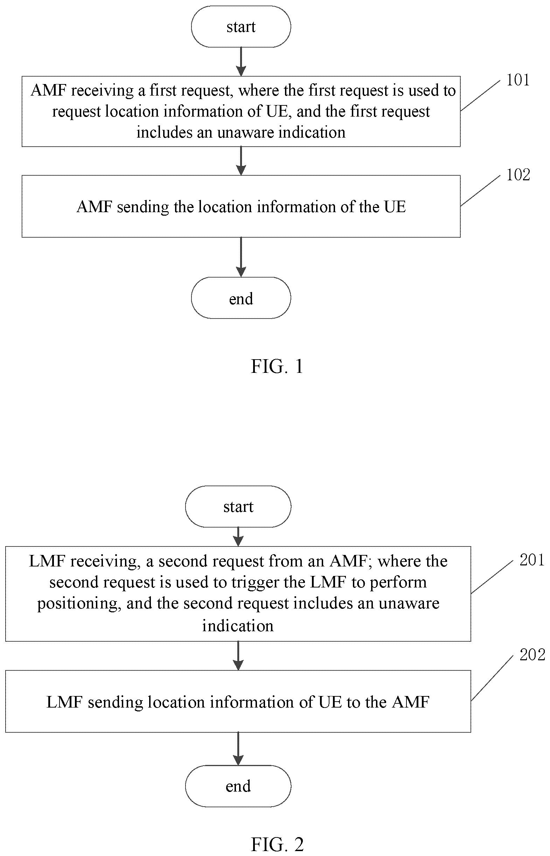

Referring to FIG. 1, FIG. 1 is a flowchart of an information processing method according to an embodiment of the present disclosure. As shown in FIG. 1, the method includes the following steps.

Step 101: receiving, by an access and mobility management function (AMF), a first request, where the first request is used to request location information of a user equipment (UE), and the first request includes an unaware indication.

In one embodiment of the present disclosure, the AMF may receive a first request sent by a gateway mobile location center (GMLC). The unaware indication may include a UE unaware indication or a user unaware indication. The UE unawareness can be understood as the UE being unaware of the network's processing behavior; and the user unawareness can be understood as the user of the UE being unaware of the network's processing behavior, for example, not prompting the user with information, etc.

Step 102: sending, by the AMF, the location information of the UE.

The location information of the UE is obtained from a location management function (LMF), or may be stored in the AMF itself. That is, the AMF can obtain the location information of the UE through interaction with the LMF. The AMF can also obtain the location information of the UE from information stored in the AMF. If the AMF obtains the location information from the information stored in the AMF, the location information of the UE may refer to location information of the UE closest to the time when the embodiment of the present disclosure is executed.

Optionally, if the AMF obtains the location information of the UE from the AMF itself, then the location information of the UE includes the location information of the UE stored in the AMF. The UE is in an idle state or a radio resource control (RRC) inactive state.

In this step, if the AMF obtains the location information of the UE from the LMF, the AMF may send a second request to the LMF. The second request is used to trigger the LMF to perform positioning, and the second request includes the unaware indication. Afterwards, the AMF receives the location information of the UE sent by the LMF, and sends the location information of the UE. Specifically, the AMF sends the location information of the UE to the GMLC.

In practical applications, the UE can be in different states, such as idle state, connected state, RRC inactive state (RRC_INACTIVE). Then, in order to improve efficiency of obtaining the location information, if the UE is in the idle state or the RRC inactive state, the AMF sends the second request to the LMF after the UE enters the connected state; or, if the UE is in the idle state, the AMF initiates a service request process to cause the UE to enter the connected state, and then the AMF sends the second request to the LMF after the UE enters the connected state.

Optionally, the AMF sends a third request to a radio access network (RAN) node. The third request is used to transmit a location request, and the third request includes the unaware indication. The AMF receives a response message sent by the RAN node, and the AMF sends the location information of the UE or a failure response.

If the RAN node determines that the UE is in the RRC inactive state, the RAN node will return a failure response message. At this point, the AMF sends a failure response. For example, the AMF sends a failure response to the LMF. If the RAN node determines that the UE is in the RRC connected state, the RAN node will return measurement information. At this point, the AMF sends the location information of the UE. If the RAN node returns a failure response message, the AMF may also send a cancel location request to the LMF.

In the above process, all operations that require user participation can be skipped, such as privacy checks, notifying users of location requests, etc. Specifically, the AMF ignores the privacy check; or, the AMF does not send a fourth request to the UE, and the fourth request is used to notify positioning of the UE; or, the AMF sends a fourth request to the UE, and the fourth request is used to notify the positioning of the UE, and the fourth request includes an unaware indication.

The fourth request may be, for example, a location notification call request message or the like.

In the embodiment of the present disclosure, the AMF obtains the location information of the UE according to the unaware indication in the first request, thereby realizing unaware positioning.

Referring to FIG. 2, FIG. 2 is a flowchart of an information processing method according to an embodiment of the present disclosure. As shown in FIG. 2, the method includes the following steps.

Step 201: receiving, by an LMF, a second request from an AMF; where the second request is used to trigger the LMF to perform positioning, and the second request includes an unaware indication.

The unaware indication may include a UE unaware indication or a user unaware indication.

Step 202: sending, by the LMF, location information of UE to the AMF.

In this step, the LMF may select a positioning method according to the second request, and send the location information of the UE to the AMF, where the location information of the UE is obtained according to the positioning method. The positioning method includes but is not limited to: uplink-enhanced cell-ID (UL-ECID), uplink-time difference of arrival (UL-TDOA), uplink-angle of arrival (UL-TDOA).

Specifically, the LMF sends a fifth request to a radio access network (RAN) node, and the fifth request includes the unaware indication.

The LMF may have different processing manners according to different responses of the RAN node to the fifth request.

For example, the LMF may receive response information sent by the RAN node according to the fifth request to determine the location information of the UE, and send the location information of the UE to the AMF. The LMF may trigger the positioning process according to the second request, obtain measurement information from the RAN node, and calculate the location information of the UE based on the measurement information.

For another example, if the RAN node rejects the fifth request, that is, the LMF receives a reject message or reject response from the RAN node, then the LMF may send a reject message to the AMF after receiving the second request. Then, the LMF will not provide the location information of the UE to the LMF.

Optionally, the LMF may also receive a cancel location request sent by the AMF.

In the embodiment of the present disclosure, the LMF can obtain the location information of the UE according to the unaware indication in the second request, thereby realizing unaware positioning.

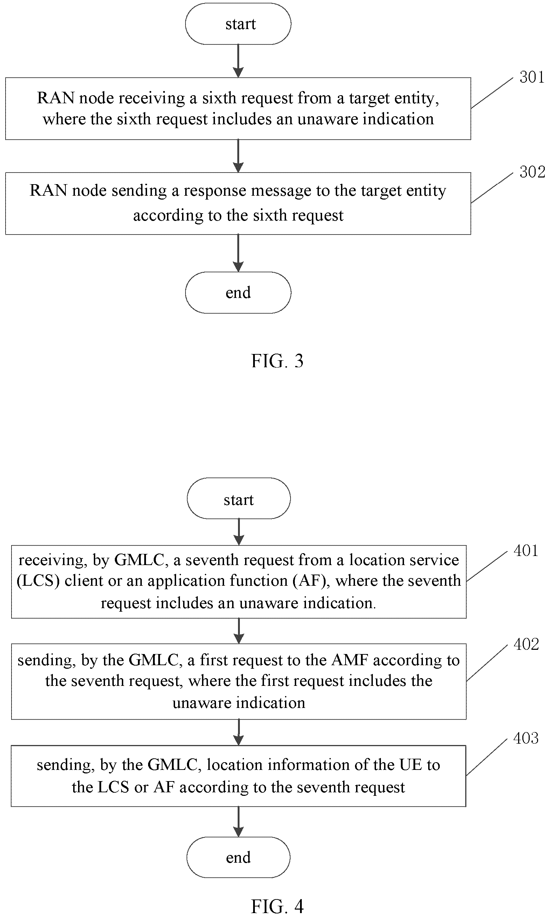

Referring to FIG. 3, FIG. 3 is a flowchart of an information processing method according to an embodiment of the present disclosure. As shown in FIG. 3, the method includes the following steps.

Step 301: receiving, by an RAN node, a sixth request from a target entity, where the sixth request includes an unaware indication.

The unaware indication may include a UE unaware indication or a user unaware indication. The target entity may include LMF or AMF.

Step 302: sending, by the RAN node, a response message to the target entity according to the sixth request.

If the target entity includes an LMF, in this step, the RAN node can send a response message to the LMF in different ways according to the status of the UE.

If the UE is in the connected state, the RAN node measures a signal of the UE according to the sixth request to obtain measurement information. After that, the RAN node sends a response message to the LMF, and the response message includes the measurement information.

Alternatively, if the UE is in the RRC inactive state, after the UE is in the connected state, the RAN node obtains the measurement information of the UE according to the sixth request. After that, the RAN node sends a response message to the LMF, and the response message includes the measurement information.

Alternatively, the RAN node sends a common sounding reference signal (SRS) configuration to the UE according to the sixth request and obtains the measurement information of the UE. After that, the RAN node sends a response message to the LMF, and the response message includes the measurement information. Since the UE does not know that the common SRS configuration is related to positioning, unaware positioning can be better achieved in this way.

If the target entity includes an LMF, in this step, if the UE is in the RRC inactive state, the RAN node rejects the sixth request. The RAN node sends a response message to the LMF, and the response message includes a rejection reason.

In the embodiment of the present disclosure, the RAN node can obtain the location information of the UE according to the unaware indication in the sixth request, thereby realizing unaware positioning.

Optionally, in the embodiment of the present disclosure, after the step 301, the RAN node may also send a rejection request to the LMF. At this point, the step 302 is not executed.

Referring to FIG. 4, FIG. 4 is a flow chart of an information processing method according to an embodiment of the present disclosure. As shown in FIG. 4, the method includes the following steps.

Step 401: receiving, by GMLC, a seventh request from a location service (LCS) client or an application function (AF), where the seventh request includes an unaware indication.

The unaware indication may include a UE unaware indication or a user unaware indication.

Step 402: sending, by the GMLC, a first request to the AMF according to the seventh request, where the first request includes the unaware indication.

Step 403: sending, by the GMLC, location information of the UE to the LCS or AF according to the seventh request.

The location information of the UE is sent by the AMF to the GMLC, or is stored in the GMLC.

Specifically, the GMLC determines target location information according to latest location information of the UE and/or the location information of the UE stored in the GMLC itself, and sends the target location information to the LCS or AF. The target location information may be location information that meets a preset condition, for example, location information whose quality of service (QoS) meets a certain condition.

In the embodiment of the present disclosure, the GMLC can obtain the location information of the UE according to the unaware indication in the seventh request, thereby realizing unaware positioning.

Optionally, in the embodiment of the present disclosure, after the step 401, the GMLC may also reject the seventh request. For example, the GMLC may send a location rejection request carrying a rejection reason to the LCS client or AF. At this point, the steps 402 to 403 may not be executed, or the step 403 may not be executed.

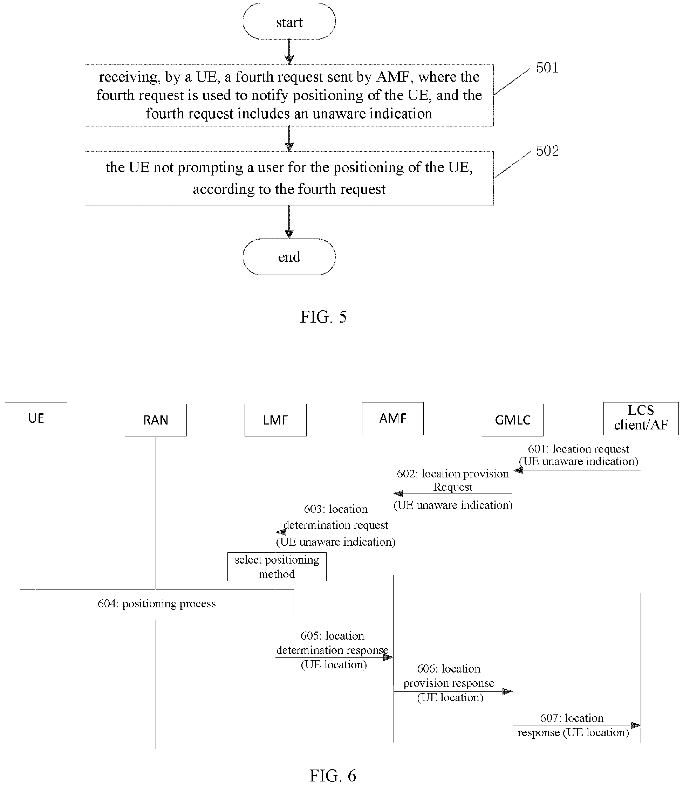

Referring to FIG. 5, FIG. 5 is a flowchart of an information processing method according to an embodiment of the present disclosure. As shown in FIG. 5, the method includes the following steps.

Step 501: receiving, by a UE, a fourth request sent by AMF, where the fourth request is used to notify positioning of the UE, and the fourth request includes an unaware indication.

The unaware indication may include a UE unaware indication or a user unaware indication.

Step 502: the UE not prompting a user for the positioning of the UE, according to the fourth request.

For example, in this step, the UE may not send prompt information to the user.

In the embodiment of the present disclosure, GMLC does not prompt the user about the positioning of the UE according to the unaware indication, thereby realizing unaware positioning.

Referring to FIG. 6, FIG. 6 is a flowchart of an information processing method according to an embodiment of the present disclosure. The embodiments of the present disclosure relate to a UE unaware positioning process when the UE is in a connected state, which specifics may include the following steps.

Step 601: sending, by LCS client/AF, a location request to GMLC, where the request includes a UE unaware indication.

Step 602: sending, by GMLC, a location provision request to the AMF, where the request includes the UE unaware indication.

Step 603: sending, by the AMF, a location determination request to the LMF, where the request includes the UE unaware indication; selecting, by LMF, a positioning method according to the UE unaware indication, such as selecting UL-ECID, UL-TDOA, UL-AOA.

Step 604: LMF triggering a positioning process.

Step 605: sending, by the LMF, a location determination response to the AMF, where the response includes a UE location.

Step 606: sending, by the AMF, a location provision response to the GMLC, where the response includes the UE location.

Step 607: sending, by the GMLC, a location response to the LCS client/AF, where the response includes the UE location.

In the step 604 of the above process, the RAN node may (for example, the LMF selects UL-TDOA, UL-AOA positioning method) provide the UE with UE SRS configuration or common SRS configuration, because the UE does not know that the SRS configuration is positioning related, thereby realizing UE unaware positioning.

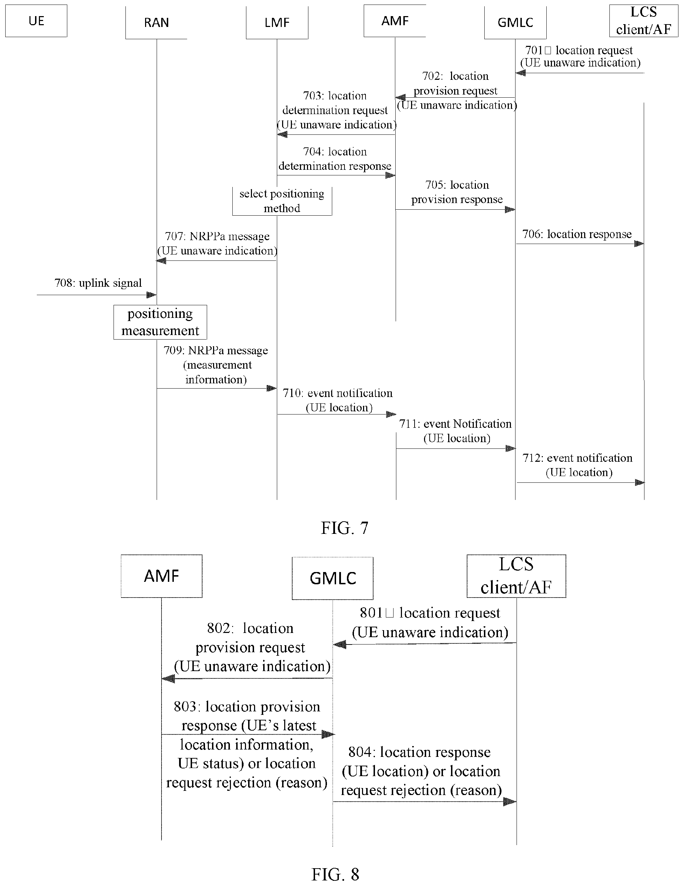

Referring to FIG. 7, FIG. 7 is a flowchart of an information processing method according to an embodiment of the present disclosure. The embodiments of the present disclosure relate to a UE unaware positioning process when the UE is in a connected state. Different from the embodiment shown in FIG. 6, in this embodiment, the RAN node does not provide the SRS configuration to the UE, but waits for the UE to send an uplink signal and completes positioning-related measurement by measuring the uplink signal sent by the UE. The method specifics may include the following steps.

Step 701: sending, by LCS client/AF, a location request to GMLC, where the request includes a UE unaware indication.

Step 702: sending, by the GMLC, a location provision request to the AMF, where the request includes the UE unaware indication.

Step 703: sending, by the AMF, a location determination request to the LMF, where the request includes the UE unaware indication.

Step 704: returning, by the LMF, a location determination response to the AMF, indicating that the UE unaware indication is received.

Step 705: returning, by the AMF, a location provision response, to the GMLC, indicating that the UE unaware indication is received.

Step 706: returning, by the GMLC, a location response to the LCS client/AF, indicating that the UE unaware indication is received.

Step 707: selecting, by the LMF, a positioning method and sending an NRPPa message to the RAN node, where the message carries the UE unaware indication; the RAN node waiting for the UE to send an uplink signal.

Step 708: sending, by the UE, an uplink signal; measuring, by the RAN node, information required for positioning.

Step 709: sending, by the RAN node, an NRPPa message to the LMF, where the message carries measurement information; calculating, by the LMF, a UE location based on the measurement information.

Step 710: sending, by the LMF, an event notification carrying the UE location to the AMF.

Step 711: sending, by the AMF, an event notification carrying the UE location to the GMLC.

Step 712: sending, by the GMLC, an event notification carrying the UE location to the LCS client/AF.

In the above process, the above step 704 and the steps 707 to 708 may be executed in parallel.

Referring to FIG. 8, FIG. 8 is a flowchart of an information processing method according to an embodiment of the present disclosure. The embodiments of this disclosure relate to a UE unaware positioning process when the UE is in an idle state or an RRC_INACTIVE state. In this embodiment, the network will not reject the location request, but will determine whether there is location information that meets QoS requirement based on locally stored UE location information; if there is location information, it will be returned to the LCS client/AF; otherwise the location request will be rejected. In this embodiment the AMF knows that the UE is in the RRC_INACTIVE state. The method specifically may include the following steps.

Step 801: sending, by the LCS client/AF, a location request to GMLC, where the request includes a UE unaware indication.

Step 802: sending, by the GMLC, a location provision request to AMF, where the request includes the UE unaware indication.

Step 803: when the AMF finds that the UE is in the IDLE state or the RRC_INACTIVE state, returning, by the AMF, a location provision response (for example, UE's latest location information, UE status, etc.) to the GMLC or returning a location request rejection (carrying a rejection reason, such as, unable to obtain UE location).

Step 804: determining, by the GMLC, whether there is location information that meets QoS requirement based on locally stored UE location information or the location information provided by the AMF; if there is, returning a location response message carrying the above location information; otherwise, returning a location request rejection (carrying a rejection reason, such as, unable to obtain UE location).

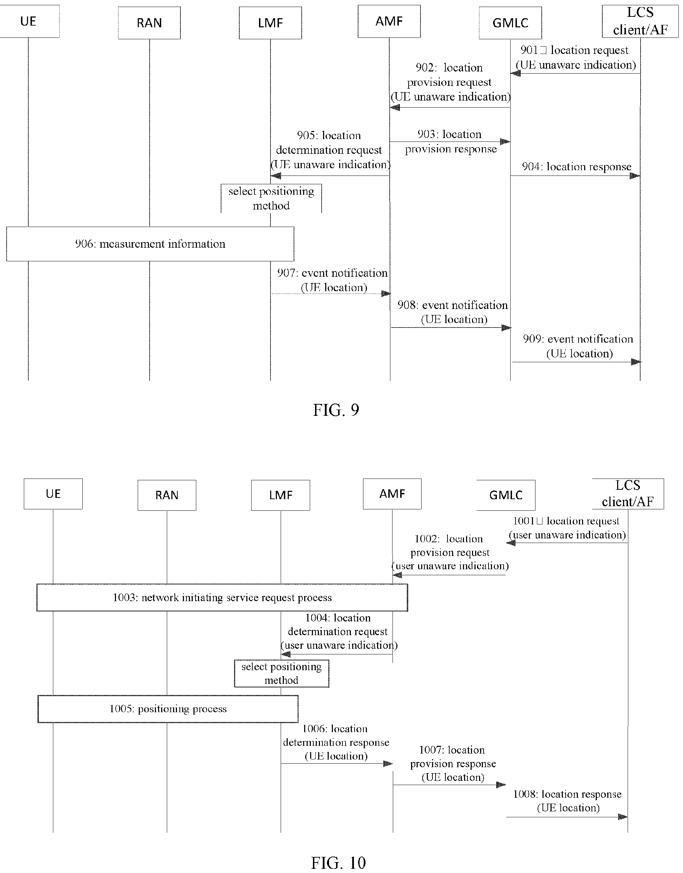

Referring to FIG. 9, FIG. 9 is a flowchart of an information processing method according to an embodiment of the present disclosure. Different from the embodiment shown in FIG. 8, in this embodiment,

the AMF delays the time of returning the UE location to the LCS client/AF, that is, the network waits for the UE to enter the connected state, performs unaware positioning of the UE, and then returns the location of the UE to the LCS client/AF. In this embodiment, the AMF knows that the UE is in RRC_INACTIVE state. The method specifically may include the following steps.

Step 901: sending, by the LCS client/AF, a location request to GMLC, where the request includes a UE unaware indication.

Step 902: sending, by the GMLC, a location provision request to AMF, where the request includes the UE unaware indication.

Step 903: returning, by the AMF, a location provision response to the GMLC, indicating that the UE unaware indication is received.

Step 904: returning, by the GMLC, a location response to the LCS client/AF, indicating that the UE unaware indication is received.

Step 905: sending, by the AMF, a location determination request to the LMF, where the request includes the UE unaware indication.

After the AMF performs the step 903, if the UE is in the IDLE or RRC _INACTIVE state, the AMF does not page the UE and locally stores positioning context information. The AMF does not execute the step 905 until the UE enters the connected state.

Step 906: selecting, by the LMF, a positioning method and obtaining measurement information of the RAN node.

In this step, the processing manners of the LMF or RAN node may refer to the steps 603 to 604, or the steps 707 to 708.

Step 907: calculating, by the LMF, a UE location, and then sending an event notification to the AMF, where the notification carries the UE location.

Step 908: sending, by the AMF, an event notification to the GMLC, where the notification carries the UE location.

Step 909: sending, by the GMLC, an event notification to the LCS client/AF, where the notification carries the UE location.

Referring to FIG. 10, FIG. 10 is a flowchart of an information processing method according to an embodiment of the present disclosure. This embodiment of the present disclosure relate to a UE unaware positioning process. The method specifically may include the following steps.

Step 1001: sending, by LCS client/AF, a location request to GMLC, where the request includes a user unaware indication.

Step 1002: sending, by GMLC, a location provision request to the AMF, where the request includes the user unaware indication.

Step 1003: initiating, by the AMF, a service request process.

Step 1004: sending, by the AMF, a location determination request to the LMF, where the request includes the user unaware indication; selecting, by the LMF, a positioning method according to the user unaware indication, such as selecting UL-ECID, UL-TDOA, UL-AOA.

Step 1005: LMF triggering a positioning process.

Step 1006: sending, by the LMF, a location determination response to the AMF, where the response includes the UE location.

Step 1007: sending, by the AMF, a location provision response, to the GMLC, where the response includes the UE location.

Step 1008: sending, by the GMLC, a location response, to the LCS client/AF, where the response includes the UE location.

When the AMF receives the message in the step 1002, if the UE is in the IDLE state, the AMF triggers a service request process initiated by the network, causing the UE to enter the connected state.

In the above process, all operations that require user participation are skipped, such as privacy check, notifying users of location request, etc.

Specifically, if privacy check information received by the AMF carries information of needing to notify the location request to the user, the AMF will not send a location notification call request message to the UE. Alternatively, the AMF sends a location notification call request message to the UE between the steps 1003 and 1004, where the message carries the user unaware indication; after receiving the message, the UE does not notify the user of any positioning-related information.

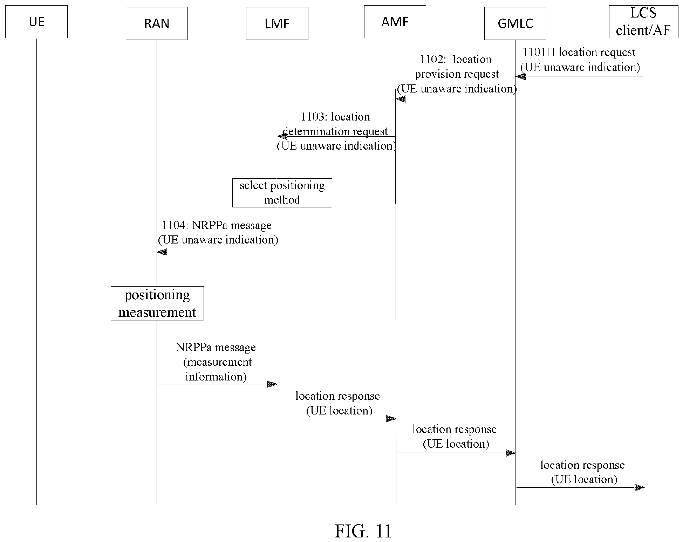

Referring to FIG. 11, FIG. 11 is a flowchart of an information processing method according to an embodiment of the present disclosure. In this embodiment, the AMF does not know that the UE is in the RRC_INACTIVE state, and the AMF sends a location request to the LMF; when the LMF sends an NRPPa message to the RAN node, in order to avoid the RAN node paging the UE, the LMF carries the UE unaware indication in the NRPPa message. The method specifically may include the following steps.

Step 1101: sending, by LCS client/AF, a location request to GMLC, where the request includes a UE unaware indication.

Step 1102: sending, by the GMLC, a location provision request to AMF, where the request includes the UE unaware indication.

Step 1103: sending, by the AMF, a location determination request to the LMF, where the request includes the UE unaware indication.

Step 1104: selecting, by the LMF, a positioning method and sending an NRPPa message to the RAN node, where the message carries the UE unaware indication.

For the RAN nodes there are two processing situations:
(1) reject NRPPa messages. In this scenario (this scenario is not shown in FIG. 11), the subsequent process is as follows:
   LMF returning a rejection message to AMF;
   the AMF sending a rejection request (the request carries a rejection reason) or a location response (the UE's latest location information) to the GMLC;
   GMLC returning a rejection request or location response to the LCS client/AF.
(2) In this scenario, as shown in FIG. 11, the RAN node waits for the UE to enter the RRC_CONNECTED state, then performs positioning measurement, and then returns an NRPPa message to the LMF, whre the message carries measurement information; the subsequent process is as follows:
   the LMF calculating a UE position based on the measurement information, and the LMF sending a location response to the AMF, where the location response carries the UE position;
   the AMF returning a location response to GMLC, where the location response carries the UE position;
   GMLC returning a positioning response to the LCS client/AF.

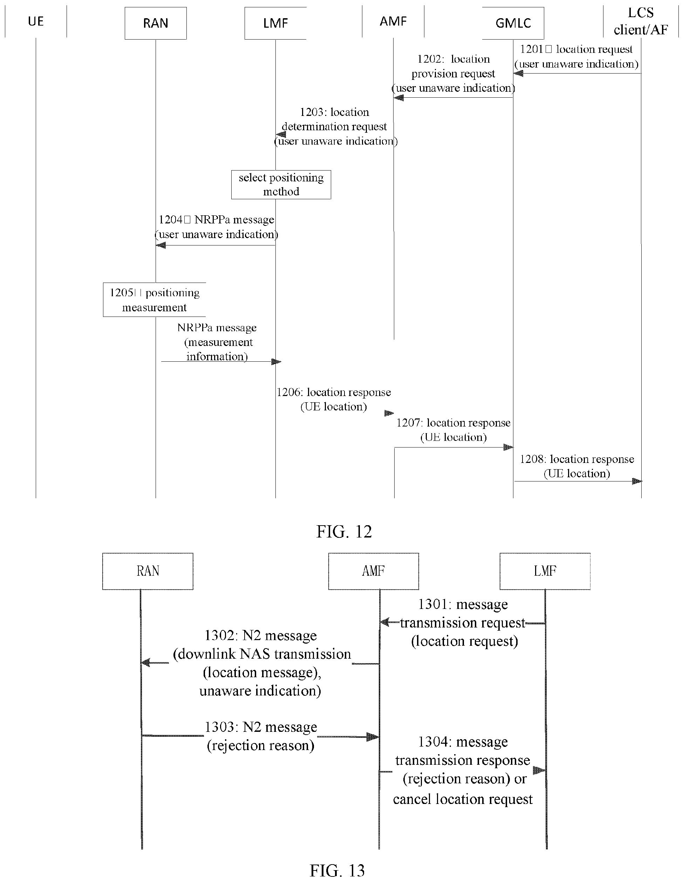

Referring to FIG. 12, FIG. 12 is a flowchart of an information processing method according to an embodiment of the present disclosure. This embodiment of the present disclosure relate to a UE unaware positioning process. The UE is in the RRC_INACTIVE state and the AMF receives a location request (user unaware indication). The AMF sends a location request to the LMF, and the message carries the user unaware indication. The LMF sends the NRPPa message carrying the user unaware indication to the RAN node. The method specifically may include the following steps.

Step 1201: sending, by LCS client/AF, a location request to GMLC, where the request includes a user unaware indication.

Step 1202: sending, by the GMLC, a location provision request to the AMF, where the request includes the user unaware indication.

Step 1203: sending, by the AMF, a location determination request to the LMF, where the request includes the user unaware indication.

Step 1204: selecting, by the LMF, a positioning method and sending an NRPPa message to the RAN node, where the message carries the user unaware indication.

Step 1205: paging, by the RAN node, the UE; when the UE enters the connected state, performing, by the RAN node, positioning measurement, and then returning an NRPPa message to the LMF, where the message carries measurement information.

Step 1206: calculating, by the LMF, a UE location based on the measurement information, and sending, by the LMF, a location response to the AMF, where the response carries the UE position.

Step 1207: returning, by the AMF, a location response to the GMLC, where the response carries the UE location.

Step 1208: returning, by the GMLC, a location response to the LCS client/AF.

Referring to FIG. 13, FIG. 13 is a flowchart of an information processing method according to an embodiment of the present disclosure. In this embodiment, the AMF sends an unaware indication to the RAN node through an N2 message. After the RAN node receives this indication, if the UE is in the RRC_INACTIVE state, the RAN node does not page the UE and rejects the N2 message. The method specifically may include the following steps.

Step 1301: sending, by LMF, a message transmission request carrying a location request to AMF.

Step 1302: sending, by the AMF, an N2 message for transmitting the location request, to the RAN node, where the N2 message carries an unaware indication.

Step 1303: when the RAN node finds that the UE is in the RRC_INACTIVE state, sending, by the RAN node, N2 message carrying a rejection reason; otherwise, performing, by the RAN node, positioning measurement, or sending the location request to the UE so that the UE performs positioning measurement. At this point, the RAN node can send measurement information to AMF (not shown).

Step 1304: if the AMF receives the N2 message carrying a failure reason, sending, by the AMF, a message transmission response (rejection reason) to the LMF, or sending a cancel location request to the LMF. If the AMF receives the measurement information, the AMF can send the measurement information to the LMF (not shown).

In this embodiment of the present disclosure, the unaware indication may be a new indication or a new value of an existing parameter. For example, the existing parameter may be LCS client type, service type, etc. For example, a new value of LCS client type can be defined to indicate an unaware indication, or a new value of service type can be defined to indicate an unaware indication. Of course, in practical applications, an existing value of the existing parameter may also represent an unaware indication, as long as both communicating parties can identify it.

It can be seen from the description of the above embodiments that through interaction between entities, UE unaware positioning or user unaware positioning is achieved, thereby facilitating monitoring of UEs or users.

The technical solution of the embodiment of the present disclosure may be applied to various systems, especially a 5G system. For example, applicable systems may be Global System of Mobile communication (GSM), Code Division Multiple Access (CDMA) system, Wideband Code Division Multiple Access (WCDMA) system, General Packet Radio Service (GPRS) system, Long Term Evolution (LTE) system, LTE Frequency Division Duplexing (FDD) system, LTE Time Division Duplexing (TDD) system, Long Term Evolution Advanced (LTE-A) system, Universal Mobile Telecommunication System (UMTS), Worldwide Interoperability for Microwave Access (WiMAX) system, or 5th-Generation (5G) New Radio (NR) system. Each of these systems includes a terminal device and a network device. Each system further includes a core network part, e.g., an Evolved Packet System (EPS) or 5G system (5GS).

The terminal device involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, remote terminal, access terminal, user terminal, user agent or user device, which will not be particularly defined herein.

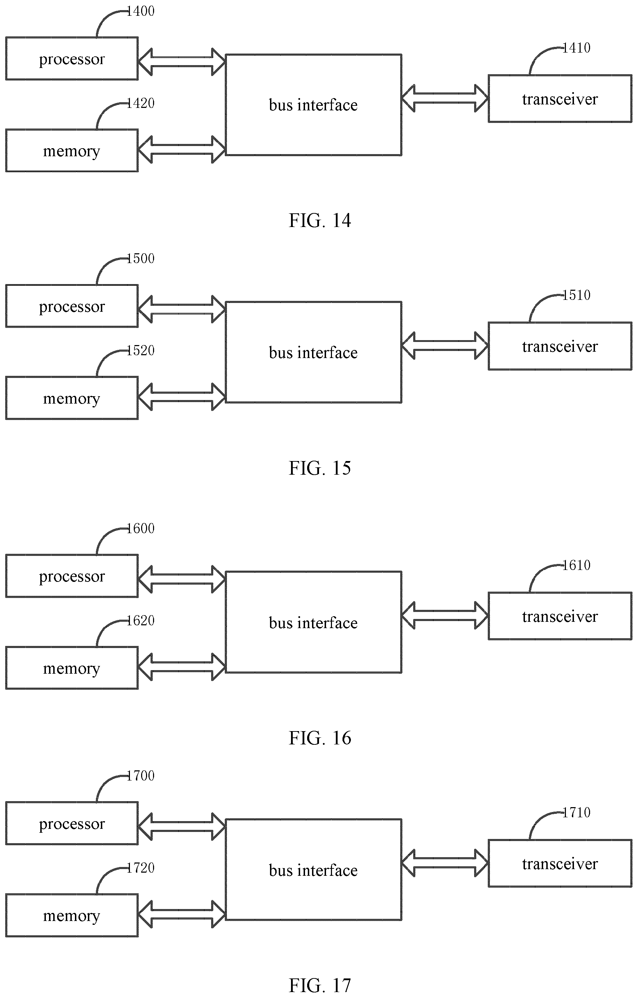

As shown in FIG. 14, an information processing device according to an embodiment of the present disclosure is applied to AMF and includes:
a processor 1400 used to read a program in a memory 1420 and perform the following processes: receiving a first request, where the first request is used to request location information of a user equipment (UE), and the first request includes an unaware indication; sending the location information of the UE;
a transceiver 1410 used to receive and transmit data under the control of the processor 1400.

In FIG. 14, a bus architecture may include any number of interconnected bus and bridge. Specifically, various circuits of one or more processors, which are represented by the processor 1400, and one or more memories, which are represented by the memory 1420, are linked together. The bus architecture may link various other circuits, such as a peripheral device, voltage regulator and a power management circuit together. These features are well known in this field; therefore, this disclosure does not make further description on these features. The bus interface provides an interface. The transceiver 1410 may be multiple elements, including a transmitter and a receiver and provide units, which communicate with other devices on the transmission medium. The transmission medium includes radio channels, wired channels, optical cables, etc. The processor 1400 is responsible for managing the bus architecture and the normal processing. The memory 1420 may be used to store data used by the processor 1400 for performing operations.

The processor 1400 may be a central processing unit (CPU), an application specific integrated circuit (ASIC), a field-programmable gate array (FPGA) or a complex programmable logic device (CPLD). The processor may also adopt multi-core architecture.

The processor 1400 is responsible for managing the bus architecture and the normal processing. The memory 1420 may be used to store data used by the processor 1400 for performing operations.

The processor 1400 is further used to read the program and perform the following steps:
sending a second request to the LMF; where the second request is used to trigger the LMF to perform positioning, and the second request includes the unaware indication;
receiving the location information of the UE sent by the LMF;
sending the location information of the UE.

The processor 1400 is further used to read the program and perform the following steps:
sending a third request to a radio access network (RAN) node; where the third request is used to transmit a location request, and the third request includes the unaware indication;
receiving a response message sent by the RAN node;
sending the location information of the UE or a failure response.

The processor 1400 is further used to read the program and perform the following steps: sending a cancel location request to LMF.

The processor 1400 is further used to read the program and perform the following steps:
if the UE is in the idle state or the RRC inactive state, sending the second request to the LMF after the UE enters the connected state; or,
if the UE is in the idle state, initiating a service request process to cause the UE to enter the connected state, and then sending the second request to the LMF after the UE enters the connected state.

The location information of the UE includes: location information of the UE stored by the AMF, where the UE is in an idle state or an RRC inactive state.

The processor 1400 is further used to read the program and perform the following steps:
ignoring the privacy check; or,
not sending a fourth request to the UE, where the fourth request is used to notify positioning of the UE; or,
sending a fourth request to the UE, where the fourth request is used to notify the positioning of the UE, and the fourth request includes an unaware indication.

It is to be noted here that the above device provided in the embodiment of the present disclosure can implement all the method steps implemented by the AMF in the above method embodiment, and can achieve the same technical effect. The parts and beneficial effects of this embodiment that are the same as those in the method embodiment will not be described in detail here.

As shown in FIG. 15, an information processing device of the embodiment of the present disclosure is applied to LMF and includes:
a processor 1500 used to read a program in a memory 1520 and perform the following processes: receiving a second request from an AMF; where the second request is used to trigger the LMF to perform positioning, and the second request includes an unaware indication; sending location information of UE to the AMF;
a transceiver 1510 used to receive and transmit data under the control of the processor 1500.

In FIG. 15, a bus architecture may include any number of interconnected bus and bridge. Specifically, various circuits of one or more processors, which are represented by the processor 1500, and one or more memories, which are represented by the memory 1520, are linked together. The bus architecture may link various other circuits, such as a peripheral device, voltage regulator and a power management circuit together. These features are well known in this field; therefore, this disclosure does not make further description on these features. The bus interface provides an interface. The transceiver 1510 may be multiple elements, including a transmitter and a receiver and provide units, which communicate with other devices on the transmission medium. The processor 1500 is responsible for managing the bus architecture and the normal processing. The memory 1520 may be used to store data used by the processor 1500 for performing operations.

The processor 1500 may be a central processing unit (CPU), an application specific integrated circuit (ASIC), a field-programmable gate array (FPGA) or a complex programmable logic device (CPLD). The processor may also adopt multi-core architecture.

The processor 1500 is responsible for managing the bus architecture and the normal processing. The memory 1520 may be used to store data used by the processor 1500 for performing operations.

The processor 1500 is further used to read the program and perform the following steps:
selecting a positioning method according to the second request;
sending the location information of the UE to the AMF, where the location information of the UE is obtained according to the positioning method.

The processor 1500 is further used to read the program and perform the following steps:
sending a fifth request to a radio access network (RAN) node, where the fifth request includes the unaware indication;
receiving response information sent by the RAN node according to the fifth request to determine the location information of the UE;
sending the location information of the UE to the AMF.

The processor 1500 is further used to read the program and perform the following steps:
receiving a cancel location request sent by the AMF.

It is to be noted here that the above device provided in the embodiment of the present disclosure can implement all the method steps implemented by the LMF in the above method embodiment, and can achieve the same technical effect. The parts and beneficial effects of this embodiment that are the same as those in the method embodiment will not be described in detail here.

As shown in FIG. 16, an information processing device of the embodiment of the present disclosure is applied to an RAN node and includes:
a processor 1600 used to read a program in a memory 1620 and perform the following processes: receiving a sixth request from a target entity, where the sixth request includes an unaware indication; sending a response message to the target entity according to the sixth request; where the target entity may include LMF or AMF;
a transceiver 1610 used to receive and transmit data under the control of the processor 1600.

In FIG. 16, a bus architecture may include any number of interconnected bus and bridge. Specifically, various circuits of one or more processors, which are represented by the processor 1600, and one or more memories, which are represented by the memory 1620, are linked together. The bus architecture may link various other circuits, such as a peripheral device, voltage regulator and a power management circuit together. These features are well known in this field; therefore, this disclosure does not make further description on these features. The bus interface provides an interface. The transceiver 1610 may be multiple elements, including a transmitter and a receiver and provide units, which communicate with other devices on the transmission medium. The processor 1600 is responsible for managing the bus architecture and the normal processing. The memory 1620 may be used to store data used by the processor 1600 for performing operations.

The processor 1600 may be a central processing unit (CPU), an application specific integrated circuit (ASIC), a field-programmable gate array (FPGA) or a complex programmable logic device (CPLD). The processor may also adopt multi-core architecture.

The processor 1600 is responsible for managing the bus architecture and the normal processing. The memory 1620 may be used to store data used by the processor 1600 for performing operations.

The target entity includes LMF, and the processor 1600 is further used to read the program and perform the following steps:
if the UE is in the connected state, measuring a signal of the UE according to the sixth request to obtain measurement information;
sending a response message to the LMF, where the response message includes the measurement information.

The target entity includes LMF, and the processor 1600 is further used to read the program and perform the following steps:
if the UE is in the RRC inactive state, after the UE is in the connected state, obtaining the measurement information of the UE according to the sixth request;
sending a response message to the LMF, where the response message includes the measurement information.

The target entity includes LMF, and the processor 1600 is further used to read the program and perform the following steps:
sending a common sounding reference signal (SRS) configuration to the UE according to the sixth request, measuring a signal of the UE to obtain the measurement information;
sending a response message to the LMF, where the response message includes the measurement information.

The target entity includes LMF, and the processor 1600 is further used to read the program and perform the following steps:
if the UE is in the RRC inactive state, rejecting the sixth request;
sending a response message to the LMF, where the response message includes a rejection reason.

It is to be noted here that the above device provided in the embodiment of the present disclosure can implement all the method steps implemented by the RAN in the above method embodiment, and can achieve the same technical effect. The parts and beneficial effects of this embodiment that are the same as those in the method embodiment will not be described in detail here.

As shown in FIG. 17, an information processing device of the embodiment of the present disclosure is applied to GMI,C and includes:
a processor 1700 used to read a program in a memory 1720 and perform the following processes: receiving a seventh request from a location service (LCS) client or an application function (AF), where the seventh request includes an unaware indication; sending a first request to the AMF according to the seventh request, where the first request includes the unaware indication; sending location information of the UE to the LCS or AF according to the seventh request;
a transceiver 1710 used to receive and transmit data under the control of the processor 1700.

In FIG. 17, a bus architecture may include any number of interconnected bus and bridge. Specifically, various circuits of one or more processors, which are represented by the processor 1700, and one or more memories, which are represented by the memory 1720, are linked together. The bus architecture may link various other circuits, such as a peripheral device, voltage regulator and a power management circuit together. These features are well known in this field; therefore, this disclosure does not make further description on these features. The bus interface provides an interface. The transceiver 1710 may be multiple elements, including a transmitter and a receiver and provide units, which communicate with other devices on the transmission medium. The processor 1700 is responsible for managing the bus architecture and the normal processing. The memory 1720 may be used to store data used by the processor 1700 for performing operations.

The processor 1700 may be a central processing unit (CPU), an application specific integrated circuit (ASIC), a field-programmable gate array (FPGA) or a complex programmable logic device (CPLD). The processor may also adopt multi-core architecture.

The processor 1700 is responsible for managing the bus architecture and the normal processing. The memory 1720 may be used to store data used by the processor 1700 for performing operations.

The location information of the UE is sent by the AMF to the GMLC, or is stored in the GMLC.

It is to be noted here that the above device provided in the embodiment of the present disclosure can implement all the method steps implemented by the GMLC in the above method embodiment, and can achieve the same technical effect. The parts and beneficial effects of this embodiment that are the same as those in the method embodiment will not be described in detail here.

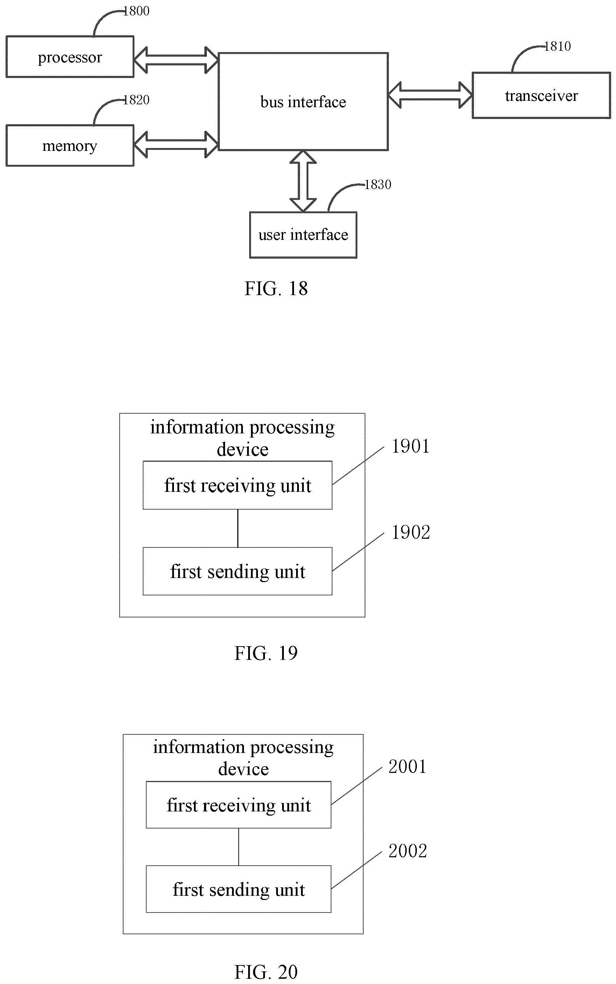

As shown in FIG. 18, an information processing device of the embodiment of the present disclosure is applied to a UE and includes:
a processor 1800 used to read a program in a memory 1820 and perform the following processes: receiving a fourth request sent by AMF, where the fourth request is used to notify positioning of the UE, and the fourth request includes an unaware indication; not prompting a user for the positioning of the UE, according to the fourth request.
a transceiver 1810 used to receive and transmit data under the control of the processor 1800.

In FIG. 18, a bus architecture may include any number of interconnected bus and bridge. Specifically, various circuits of one or more processors, which are represented by the processor 1800, and one or more memories, which are represented by the memory 1820, are linked together. The bus architecture may link various other circuits, such as a peripheral device, voltage regulator and a power management circuit together. These features are well known in this field; therefore, this disclosure does not make further description on these features. The bus interface provides an interface. The transceiver 1810 may be multiple elements, including a transmitter and a receiver and provide units, which communicate with other devices on the transmission medium. For different UEs, a user interface 1830 may be an interface that can be connected to external or internal devices. The connected devices include but are not limited to a small keyboard, a display, a speaker, a microphone, a joystick, etc.

The processor 1800 is responsible for managing the bus architecture and the normal processing. The memory 1820 may be used to store data used by the processor 1800 for performing operations.

The processor 1800 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

It is to be noted here that the above device provided in the embodiment of the present disclosure can implement all the method steps implemented by the UE in the above method embodiment, and can achieve the same technical effect. The parts and beneficial effects of this embodiment that are the same as those in the method embodiment will not be described in detail here.

Referring to FIG. 19, an information processing device of the embodiment of the present disclosure is applied to AMF and includes:
a first receiving unit 1901 used to receive a first request, where the first request is used to request location information of a user equipment (UE), and the first request includes an unaware indication;
a first sending unit 1902 used to send the location information of the UE.

Optionally, the first sending unit includes:
a first sending subunit used to send a second request to the LMF; where the second request is used to trigger the LMF to perform positioning, and the second request includes the unaware indication; a first receiving subunit used to receive the location information of the UE sent by the LMF; a second sending subunit used to send the location information of the UE.

Optionally, the first sending subunit is used to, if the UE is in the idle state or the RRC inactive state, send the second request to the LMF after the UE enters the connected state; or, if the UE is in the idle state, initiate a service request process to cause the UE to enter the connected state, and then send the second request to the LMF after the UE enters the connected state.

Optionally, the first sending unit includes:
a third sending subunit used to send a third request to a radio access network (RAN) node; where the third request is used to transmit a location request, and the third request includes the unaware indication; a first receiving subunit used to receive a response message sent by the RAN node; a fourth sending subunit used to send the location information of the UE or a failure response.

Optionally, the device further includes: a fifth sending subunit, used to send a cancel location request to LMF.

Optionally, the location information of the UE includes: the location information of the UE stored in the AMF, where the UE is in an idle state or an RRC inactive state.

Optionally, the device further includes: a processing unit used to perform any of the following:
ignoring the privacy check; or,
not sending a fourth request to the UE, where the fourth request is used to notify positioning of the UE; or,
sending a fourth request to the UE, where the fourth request is used to notify the positioning of the UE, and the fourth request includes an unaware indication.

It is to be noted here that the above device provided in the embodiment of the present disclosure can implement all the method steps implemented by the AMF in the above method embodiment, and can achieve the same technical effect. The parts and beneficial effects of this embodiment that are the same as those in the method embodiment will not be described in detail here.

Referring to FIG. 20, an information processing device according to the embodiment of the present disclosure is applied to LMF and includes:
a first receiving unit 2001 used to receive a second request from an AMF; where the second request is used to trigger the LMF to perform positioning, and the second request includes an unaware indication; a first sending unit 2002 used to send location information of UE to the AMF.

Optionally, the first sending unit includes:
a first selection subunit used to select a positioning method according to the second request; a first sending subunit used to send the location information of the UE to the AMF, where the location information of the UE is obtained according to the positioning method.

Optionally, the first sending subunit is used to,
send a fifth request to a radio access network (RAN) node, where the fifth request includes the unaware indication;
receive response information sent by the RAN node according to the fifth request to determine the location information of the UE;
send the location information of the UE to the AMF.

Optionally, the device may further include:
a second receiving unit used to receive a cancel location request sent by the AMF.

It is to be noted here that the above device provided in the embodiment of the present disclosure can implement all the method steps implemented by the LMF in the above method embodiment, and can achieve the same technical effect. The parts and beneficial effects of this embodiment that are the same as those in the method embodiment will not be described in detail here.

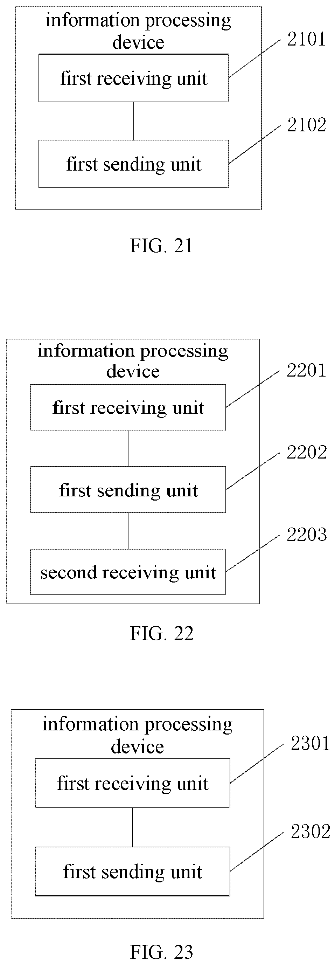

Referring to FIG. 21, an information processing device according to an embodiment of the present disclosure is applied to a RAN node and includes:
a first receiving unit 2101 used to receive a sixth request from a target entity, where the sixth request includes an unaware indication; a first sending unit 2102 used to send a response message to the target entity according to the sixth request; where the target entity may include LMF or AMF.

Optionally, the target entity includes LMF; the first sending unit includes:
a first receiving subunit used to, if the UE is in the connected state, measure a signal of the UE according to the sixth request to obtain measurement information;
a first sending subunit used to send a response message to the LMF, where the response message includes the measurement information.

Optionally, the target entity includes LMF; the first sending unit includes:
a first obtaining subunit used to, if the UE is in the RRC inactive state, after the UE is in the connected state, obtain the measurement information of the UE according to the sixth request;
a first sending subunit used to send a response message to the LMF, where the response message includes the measurement information.

Optionally, the target entity includes LMF; the first sending unit includes:
a first acquisition subunit used to send a common sounding reference signal (SRS) configuration to the UE according to the sixth request, measure a signal of the UE to obtain the measurement information;
a first sending subunit used to send a response message to the LMF, where the response message includes the measurement information.

Optionally, the target entity includes LMF; the first sending unit includes:
a first processing subunit used to, if the UE is in the RRC inactive state, reject the sixth request;
a first sending subunit used to send a response message to the LMF, where the response message includes a rejection reason.

It is to be noted here that the above device provided in the embodiment of the present disclosure can implement all the method steps implemented by the RAN in the above method embodiment, and can achieve the same technical effect. The parts and beneficial effects of this embodiment that are the same as those in the method embodiment will not be described in detail here.

Referring to FIG. 22, an information processing device of the embodiment of the present disclosure is applied to GMI,C and includes:
a first receiving unit 2201 used to receive a seventh request from a location service (LCS) client or an application function (AF), where the seventh request includes an unaware indication; a first sending unit 2202 used to send a first request to the AMF according to the seventh request, where the first request includes the unaware indication; a second receiving unit 2203 used to send location information of the UE to the LCS or AF according to the seventh request.

Optionally, the location information of the UE is sent by the AMF to the GMLC, or is stored in the GMLC.

It is to be noted here that the above device provided in the embodiment of the present disclosure can implement all the method steps implemented by the GMLC in the above method embodiment, and can achieve the same technical effect. The parts and beneficial effects of this embodiment that are the same as those in the method embodiment will not be described in detail here.

Referring to FIG. 23, an information processing device according to the embodiment of the present disclosure is applied to a UE and includes:
a first receiving unit 2301 used to receive a fourth request sent by AMF, where the fourth request is used to notify positioning of the UE, and the fourth request includes an unaware indication; a first sending unit 2302 used to, not prompt a user for the positioning of the UE, according to the fourth request.

It is to be noted here that the above device provided in the embodiment of the present disclosure can implement all the method steps implemented by the UE in the above method embodiment, and can achieve the same technical effect. The parts and beneficial effects of this embodiment that are the same as those in the method embodiment will not be described in detail here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

It is to be noted here that the above device provided in the embodiment of the present disclosure can implement all the method steps implemented in the above method embodiment, and can achieve the same technical effect. The parts and beneficial effects of this embodiment that are the same as those in the method embodiment will not be described in detail here.

One embodiment of the present disclosure further provides a processor-readable storage medium, which includes a program stored thereon. The program is used to cause a processor to execute each process of the foregoing information processing method and the same technical effect can be achieved, which is not repeated here to avoid repetition. The processor-readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, non-volatile memory (Nand flash), solid-state drive (SSD)).

It is to be understood that the terms "including" and "having" and any variations thereof are intended to cover non-exclusive inclusions, for example, a process, method, product or device that includes a sequence of elements needs not be limited to those elements that are expressly listed, but may include elements that are not expressly listed or that are inherent to the process, method, product or device. Without further limitation, an element defined by the statement "including a ..." does not exclude the presence of other identical element in the process, method, article or device including the element.

Through the above description of the embodiments, those skilled in the art can clearly understand that the methods of the above embodiments can be implemented by means of software plus the necessary general hardware platform, or, of course, can also be implemented by hardware, but in many cases the former is better. Based on this understanding, the essence of the technical solution of the present disclosure or the part that contributes to the related art or the part of the technical solution may be embodied in the form of a software product. The computer software product is stored in a storage medium (such as ROM/RAM, magnetic disk, optical disk), includes several instructions which enables a terminal (which may be a mobile phone, computer, server, air conditioner, or network device, etc.) to execute the methods described in various embodiments of the present disclosure.

The embodiments of the present disclosure have been described above in conjunction with the accompanying drawings. However, the present disclosure is not limited to the above specific implementations. The above specific implementations are only illustrative and not restrictive. Under the guidance of the present disclosure, those skilled in the art can make many forms without departing from the purpose and protection scope of the claims of the present disclosure, all of which are within the protection of the present disclosure.

It is to be noted that division of units in the embodiment of the present disclosure is only a logical function division; in actual implementation, all or part of the units may be integrated into one physical entity, or may also be physically separated. All of these units may be implemented in the form of using processing components to call software, or may be implemented by hardware, or some units are implemented in the form of using processing components to call software and some units are implemented by hardware. For example, a determination unit may be a separate processing element, or may be integrated into a chip of the above device; in addition, the determination unit may also be stored in the form of program codes in the memory of the above device, and is called by a certain processing element of the above device to execute the function of the above determination unit. The implementation of other units is similar. In addition, all or part of these units may be integrated together or implemented independently. The processing element described here may be an integrated circuit with signal processing capabilities. In the implementation process, each step of the above method or each of the above units may be completed by instructions of hardware integrated logic circuits or software in the processor element.

For example, each module, unit, sub-unit or sub-module may be one or more integrated circuits configured to implement the above method, such as one or more application specific integrated circuits (ASICs), or one or multiple digital signal processors (DSP), or one or more field programmable gate arrays (FPGA). For another example, when one of the above units is implemented in the form of using a processing element to call program codes, the processing element may be a general-purpose processor, such as a central processing unit (CPU) or other processors that can call the program codes. For another example, these units may be integrated together and implemented in the form of a system-on-a-chip (SOC).

The terms "first", "second" and the like in the description and claims of the present disclosure are used to distinguish similar objects and are not necessarily used to describe a specific order or sequence. It is to be understood that data so used are interchangeable under appropriate circumstances so that the embodiments of the disclosure described herein may be implemented, for example, in sequences other than those illustrated or described herein. In addition, the terms "including" and "having" and any variations thereof are intended to cover non-exclusive inclusions, for example, a process, method, system, product or device that includes a sequence of steps or units needs not be limited to those steps or units that are expressly listed, but may include steps or units that are not expressly listed or that are inherent to the process, method, product or device. In addition, "and/or" in the description and claims is used to indicate at least one of connected objects, for example, A and/or B and/or C, means that there are seven situations: there is A alone, there is B alone, there is C alone, there are both A and B, there are both B and C, there are both A and C, and there are A, B and C. Similarly, "at least one of A and B" in the specification and claims means that there is A alone, there is B alone, or there are both A and B.

The embodiments of the present disclosure have been described above in conjunction with the accompanying drawings. However, the present disclosure is not limited to the above specific implementations. The above specific implementations are only illustrative and not restrictive. Under the guidance of the present disclosure, those skilled in the art can make many forms without departing from the purpose and protection scope of the claims of the present disclosure, all of which are within the protection of the present disclosure.

## Claims

1. An information processing method, comprising:
receiving, by an access and mobility management function (AMF), a first request; wherein the first request is used to request location information of a user equipment (UE), and the first request includes an unaware indication;
sending, by the AMF, the location information of the UE.

2. The method according to claim 1, wherein the sending, by the AMF, the location information of the UE, includes:
sending, by the AMF, a second request to a location management function (LMF); wherein the second request is used to trigger the LMF to perform positioning, and the second request includes the unaware indication;
receiving, by the AMF, the location information of the UE sent by the LMF;
sending, by the AMF, the location information of the UE.

3. The method according to claim 1, wherein the sending, by the AMF, the location information of the UE, includes:
sending, by the AMF, a third request to a radio access network (RAN) node; wherein the third request is used to transmit a location request, and the third request includes the unaware indication;
receiving, by the AMF, a response message sent by the RAN node;
sending, by the AMF, the location information of the UE or a failure response.

4. The method according to claim 3, wherein the method further includes:
sending, by the AMF, a cancel location request to LMF.

5. The method according to claim 2, wherein the sending, by the AMF, a second request to a location management function (LMF), include:
if the UE is in an idle state or a radio resource control (RRC) inactive state, sending, by the AMF, the second request to the LMF after the UE enters a connected state; or,
if the UE is in an idle state, initiating, by the AMF, a service request process to cause the UE to enter a connected state, and then sending, by the AMF, the second request to the LMF after the UE enters the connected state.

6. The method according to claim 1, wherein the location information of the UE includes: location information of the UE stored by the AMF, wherein the UE is in an idle state or an RRC inactive state.

7. The method according to claim 1, wherein the method further includes:
ignoring privacy check; or,
not sending, by the AMF, a fourth request to the UE, wherein the fourth request is used to notify positioning of the UE; or,
sending, by the AMF, a fourth request to the UE, wherein the fourth request is used to notify the positioning of the UE, and the fourth request includes the unaware indication.

8. An information processing method, comprising:
receiving, by a location management function (LMF), a second request from an access and mobility management function (AMF); wherein the second request is used to trigger the LMF to perform positioning, and the second request includes an unaware indication;
sending, by the LMF, location information of a user equipment (UE) to the AMF.

9. The method according to claim 8, wherein the sending, by the LMF, location information of a user equipment (UE) to the AMF, includes:
selecting, by the LMF, a positioning method according to the second request;
sending, by the LMF, the location information of the UE to the AMF, wherein the location information of the UE is obtained according to the positioning method.

10. The method according to claim 8, wherein the sending, by the LMF, location information of a user equipment (UE) to the AMF, includes:
sending, by the LMF, a fifth request to a radio access network (RAN) node, wherein the fifth request includes the unaware indication;
receiving, by the LMF, response information sent by the RAN node according to the fifth request to determine the location information of the UE;
sending, by the LMF, the location information of the UE to the AMF.

11. The method according to claim 8, wherein the method further includes:
receiving, by the LMF, a cancel location request sent by the AMF.

12. An information processing method, comprising:
receiving, by a radio access network (RAN) node, a sixth request from a target entity, wherein the sixth request includes an unaware indication;
sending, by the RAN node, a response message to the target entity according to the sixth request;
wherein the target entity includes a location management function (LMF) or an access and mobility management function (AMF).

13. The method according to claim 12, wherein the target entity includes the LMF, and the sending, by the RAN node, a response message to the target entity according to the sixth request, includes:
if the UE is in a connected state, measuring, by the RAN node, a signal of the UE according to the sixth request to obtain measurement information; or, if the UE is in an RRC inactive state, after the UE is in the connected state, obtaining, by the RAN node, measurement information of the UE according to the sixth request;
sending, by the RAN node, a response message to the LMF, wherein the response message includes the measurement information.

14. The method according to claim 12, wherein the target entity includes the LMF, and the sending, by the RAN node, a response message to the target entity according to the sixth request, includes:
sending, by the RAN node, a common sounding reference signal (SRS) configuration to the UE according to the sixth request, measuring a signal of the UE to obtain measurement information;
sending, by the RAN node, a response message to the LMF, wherein the response message includes the measurement information.

15. The method according to claim 12, wherein the target entity includes the LMF, and the sending, by the RAN node, a response message to the target entity according to the sixth request, includes:
if the UE is in an RRC inactive state, rejecting, by the RAN node, the sixth request;
sending, by the RAN node, a response message to the LMF, wherein the response message includes a rejection reason.

16. An information processing method, comprising:
receiving, by a user equipment (UE), a fourth request sent by an access and mobility management function (AMF), wherein the fourth request is used to notify positioning of the UE, and the fourth request includes an unaware indication;
not prompting a user for the positioning of the UE, according to the fourth request.

17. An information processing device, applied to an access and mobility management function (AMF), comprising: a memory, a transceiver and a processor;
wherein the memory is used to store a computer program; the transceiver is used to send and receive data under control of the processor; the processor is used to read the computer program in the memory and perform the following operations:
receiving a first request; wherein the first request is used to request location information of a user equipment (UE), and the first request includes an unaware indication;
sending the location information of the UE.

18. The device according to claim 17, wherein the processor is further used to read the computer program in the memory and perform the following operations:
sending a second request to a location management function (LMF); wherein the second request is used to trigger the LMF to perform positioning, and the second request includes the unaware indication;
receiving the location information of the UE sent by the LMF;
sending the location information of the UE.

19. The device according to claim 17, wherein the processor is further used to read the computer program in the memory and perform the following operations:
sending a third request to a radio access network (RAN) node; wherein the third request is used to transmit a location request, and the third request includes the unaware indication;
receiving a response message sent by the RAN node;
sending the location information of the UE or a failure response.

20. The device according to claim 19, wherein the processor is further used to read the computer program in the memory and perform the following operations:
sending a cancel location request to LMF.

21. The device according to claim 18, wherein the processor is further used to read the computer program in the memory and perform the following operations:
if the UE is in an idle state or a radio resource control (RRC) inactive state, sending the second request to the LMF after the UE enters a connected state; or,
if the UE is in an idle state, initiating a service request process to cause the UE to enter a connected state, and then sending the second request to the LMF after the UE enters the connected state.

22. The device according to claim 17, wherein the location information of the UE includes: location information of the UE stored by the AMF, wherein the UE is in an idle state or an RRC inactive state.

23. The device according to claim 17, wherein the processor is further used to read the computer program in the memory and perform the following operations:
ignoring privacy check; or,
not sending a fourth request to the UE, wherein the fourth request is used to notify positioning of the UE; or,
sending a fourth request to the UE, wherein the fourth request is used to notify the positioning of the UE, and the fourth request includes the unaware indication.

24. An information processing device, applied to a location management function (LMF), comprising: a memory, a transceiver and a processor;
wherein the memory is used to store a computer program; the transceiver is used to send and receive data under control of the processor; the processor is used to read the computer program in the memory and perform the following operations:
receiving a second request from an access and mobility management function (AMF); wherein the second request is used to trigger the LMF to perform positioning, and the second request includes an unaware indication;
sending location information of a user equipment (UE) to the AMF.

25. The device according to claim 24, wherein the processor is further used to read the computer program in the memory and perform the following operations:
selecting a positioning method according to the second request;
sending the location information of the UE to the AMF, wherein the location information of the UE is obtained according to the positioning method.

26. The device according to claim 25, wherein the processor is further used to read the computer program in the memory and perform the following operations:
sending a fifth request to a radio access network (RAN) node, wherein the fifth request includes the unaware indication;
receiving response information sent by the RAN node according to the fifth request to determine the location information of the UE;
sending the location information of the UE to the AMF.

27. An information processing device, applied to a radio access network (RAN) node, comprising: a memory, a transceiver and a processor;
wherein the memory is used to store a computer program; the transceiver is used to send and receive data under control of the processor; the processor is used to read the computer program in the memory and perform the following operations:
receiving a sixth request from a target entity, wherein the sixth request includes an unaware indication;
sending a response message to the target entity according to the sixth request;
wherein the target entity includes a location management function (LMF) or an access and mobility management function (AMF).

28. The device according to claim 27, wherein the target entity includes the LMF; the processor is further used to read the computer program in the memory and perform the following operations:
if the UE is in a connected state, measuring a signal of the UE according to the sixth request to obtain measurement information; or, if the UE is in an RRC inactive state, after the UE is in the connected state, obtaining measurement information of the UE according to the sixth request;
sending a response message to the LMF, wherein the response message includes the measurement information.

29. The device according to claim 27, wherein the target entity includes the LMF; the processor is further used to read the computer program in the memory and perform the following operations:
sending a common sounding reference signal (SRS) configuration to the UE according to the sixth request, measuring a signal of the UE to obtain measurement information;
sending a response message to the LMF, wherein the response message includes the measurement information.

30. The device according to claim 27, wherein the target entity includes the LMF; the processor is further used to read the computer program in the memory and perform the following operations:
if the UE is in an RRC inactive state, rejecting the sixth request;
sending a response message to the LMF, wherein the response message includes a rejection reason.

31. An information processing device, applied to a user equipment (UE), comprising: a memory, a transceiver and a processor;
wherein the memory is used to store a computer program; the transceiver is used to send and receive data under control of the processor; the processor is used to read the computer program in the memory and perform the following operations:
receiving a fourth request sent by an access and mobility management function (AMF), wherein the fourth request is used to notify positioning of the UE, and the fourth request includes an unaware indication;
not prompting a user for the positioning of the LTE, according to the fourth request.

32. An information processing device, applied to AMF, comprising:
a first receiving unit used to receive a first request; wherein the first request is used to request location information of a user equipment (UE), and the first request includes an unaware indication;
a first sending unit used to send the location information of the UE.

33. An information processing device, applied to LMF, comprising:
a first receiving unit used to receive a second request from an AMF; wherein the second request is used to trigger the LMF to perform positioning, and the second request includes an unaware indication;
a first sending unit used to send location information of UE to the AMF.

34. An information processing device, applied to an RAN node, comprising:
a first receiving unit used to receive a sixth request from a target entity, wherein the sixth request includes an unaware indication;
a first sending unit used to send a response message to the target entity according to the sixth request;
wherein the target entity includes LMF or AMF.

35. An information processing device, applied to a user equipment (UE), comprising:
a first receiving unit used to receive a fourth request sent by AMF; wherein the fourth request is used to notify positioning of the UE, and the fourth request includes an unaware indication;
a first sending unit used to, not prompt a user for the positioning of the UE, according to the fourth request.

36. A processor-readable storage medium, comprising a computer program stored thereon; wherein the computer program is used to cause a processor to execute the method according to any one of claims 1 to 16.
